Europäisches Patentamt

European Patent Office

Office européen des brevets

(11) Numéro de publication: **0 014 626**
**A1**

(12) **DEMANDE DE BREVET EUROPEEN**

(21) Numéro de dépôt: **80400120.4**

(22) Date de dépôt: **25.01.80**

(51) Int. Cl.³: **C 21 B 7/24**
**G 01 B 11/24**

(30) Priorité: **31.01.79 FR 7902830**

(43) Date de publication de la demande:
**20.08.80 Bulletin 80/17**

(84) Etats Contractants Désignés:
**BE DE GB IT LU**

(71) Demandeur: **INSTITUT DE RECHERCHES DE LA**
**SIDERURGIE FRANCAISE (IRSID) France**
**185, rue Président Roosevelt**
**F-78105 Saint Germain-en-Laye(FR)**

(72) Inventeur: **Bobillon, Jean-Paul**
**Brussieu**
**F-69690 Bessenay(FR)**

(74) Mandataire: **Giovannetti, Gilberte et al,**
**185, rue Président Roosevelt**
**F-78105 Saint-Germain-en-Laye(FR)**

(54) **Procédé et dispositif de détermination en continu du profil des charges dans un haut fourneau.**

(57) Un système d'éclairage 1 comprend :

- une source lumineuse émettrice 4 et un miroir tournant 5 réfléchissant vers la surface des charges 2 un faisceau lumineux qui balaye selon un plan 8 ladite surface en la matérialisant sous la forme d'une trace lumineuse 9,

- un système de réception 3 constitué par un récepteur optique fixe 10, observant la trace 9 selon une direction faisant un angle non nul et, de préférence, compris entre 15 et 75° avec le plan de balayage 8 et délivrant un signal représentatif de l'image reçue,

- une unité 12 de traitement dudit signal pour déterminer les coordonnées spatiales des points constitutifs de la trace 9,

- des moyens de visualisation 13 restituant, à partir desdites coordonnées, le profil réel de la trace lumineuse 9 dans le plan de balayage.

EP 0 014 626 A1

# PROCEDE ET DISPOSITIF DE DETERMINATION EN CONTINU DU PROFIL DES CHARGES DANS UN HAUT FOURNEAU

La présente invention a trait au contrôle de la marche d'un haut fourneau sidérurgique et concerne plus précisément la détermination en continu du profil des charges au gueulard.

On sait que la marche d'un haut fourneau sidérurgique est conditionnée en particulier par la répartition gazeuse à l'intérieur de sa charge.

On sait également que cette répartition dépend, de façon prépondérante, du mode de chargement des matières qui, dans les hauts fourneaux modernes équipés notamment d'anneaux de choc à géométrie variable ou de goulottes mobiles de chargement, constitue un moyen pour la régler. L'expérience montre cependant qu'il est difficile de prévoir avec précision, même avec l'aide de modèles ou de maquettes, le comportement des matières à l'enfournement, le profil et l'épaisseur locale des couches successives ou la vitesse de descente des charges. Pour cela, il apparaît donc essentiel de pouvoir déterminer "in situ" le profil des charges au gueulard.

Des tentatives ont déjà été entreprises pour résoudre ce problème. On connaît par exemple des dispositifs à sonde mécanique ou des systèmes par triangulation à l'aide de rayonnement γ ou de faisceau lumineux qui éclaire la surface de la charge en la balayant.

Les sondes mécaniques que l'on fait descendre verticalement jusque sur la surface de la charge, présentent certains inconvénients. En particulier, on ne peut obtenir que des mesures ponctuelles dans le temps et dans l'espace. De plus, leur automatisation n'est pas aisée et elles nécessitent des frais d'entretien non négligeables.

Par ailleurs, les méthodes mettant en oeuvre les rayonnements γ posent notamment des difficultés d'implantation liées à l'utilisation de sources radioactives.

Les méthodes optiques apparaissent en principe plus satisfaisantes puisqu'elles sont inoffensives et qu'elles permettent un fonctionnement continu. De plus, il est possible d'installer tout le matériel nécessaire à l'extérieur du haut fourneau, ce qui en facilite l'entretien.

Toutefois, ces méthodes ne paraissent pas s'être développées jusqu'à présent comme on aurait pu s'y attendre. A la connaissance du demandeur, seules quelques tentatives ont été faites, basées en particulier sur la détermination de la longueur du faisceau incident, ce qui présente des inconvénients, tels la nécessité de traiter le signal reçu en tenant compte de la position de l'émetteur et de la direction du faisceau incident.

0014626

Le but de la présente invention est de restituer facilement, par voie optique, le profil de la surface des charges, notamment en ayant recours le moins possible aux caractéristiques géométriques du système d'éclairage.

A cet effet, l'invention a pour objet un procédé de détermination en continu, par voie optique, du profil de la surface des charges dans un haut fourneau comprenant les opérations suivantes :

- on balaye la surface des charges par un faisceau lumineux de manière à matérialiser sous forme d'une trace lumineuse la coupe de la surface par le plan de balayage,

- on observe cette trace lumineuse à partir d'une position déterminée non située dans le plan de coupe du faisceau lumineux incident,

- et, à partir de données définissant le plan de balayage, la position du lieu d'observation ainsi que la direction d'observation, on détermine la position réelle des points constituant la trace lumineuse.

L'invention a également pour objet un dispositif de mise en oeuvre du procédé, comprenant :

- un émetteur de rayons lumineux, se propageant selon un plan de balayage dont l'intersection avec la surface des charges matérialise cette dernière sous forme d'une trace lumineuse,

- un récepteur optique fixe observant cette trace selon une direction faisant un angle non nul avec le plan de balayage et délivrant un signal représentatif de l'image reçue,

- un système de traitement du signal permettant de déterminer les coordonnées spatiales des points constituant la trace lumineuse,

- et un moyen de visualisation restituant, à partir desdites coordonnées spatiales, le profil réel de la surface des charges dans le plan de balayage.

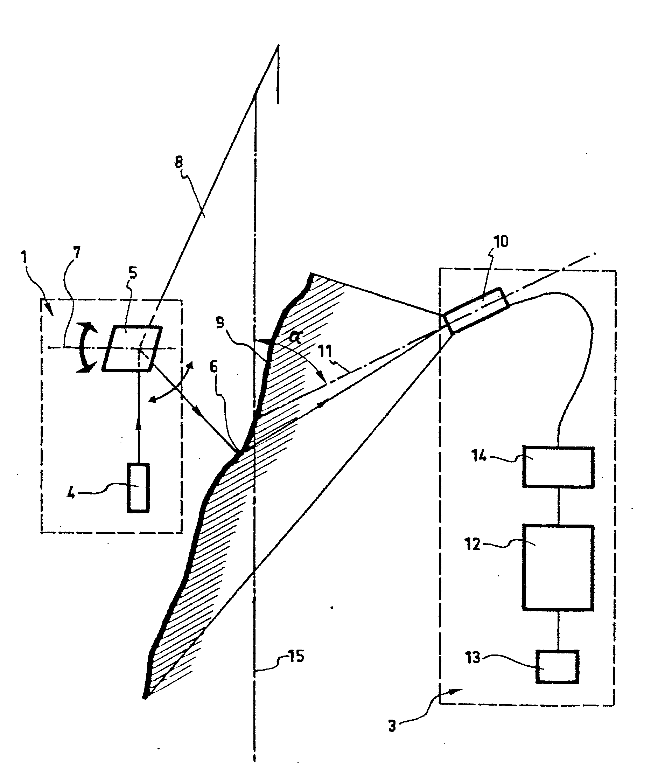

L'invention sera bien comprise et d'autres aspects et avantages ressortiront plus clairement au vu de la description qui suit, donnée en référence à la figure unique annexée représentant un schéma général du dispositif pour la mise en oeuvre du procédé.

Le dispositif est composé d'un système d'éclairage 1 de la surface des charges représentée en 2 et d'une unité 3 de réception de l'image et de restitution de profil réel.

L'ensemble est implanté au niveau du gueulard d'un haut fourneau sidérurgique non représenté mais dont l'axe est désigné en 15. Deux hublots sont ménagés dans le blindage du gueulard, au-dessus du niveau de la surface des charges 2, l'un réservé au système d'éclairage, l'autre pour l'observation.

Le système d'éclairage 1 comprend une source lumineuse fixe 4 et un miroir tournant 5 placé en regard d'un hublot et réfléchissant au travers de ce dernier le faisceau lumineux émis par la source 4 vers la surface des charges 2. La zone d'impact du faisceau sur cette surface se présente sous la forme d'une tache lumineuse désignée en 6. En faisant tourner le miroir autour de son axe 7, le faisceau lumineux engendre un plan de balayage 8 perpendiculaire à l'axe 7 et dont l'intersection avec la surface 2 se matérialise par une trace lumineuse 9, correspondant au trajet parcouru par la tache 6.

L'appareil de réception 3 comprend :

- une caméra vidéo fixe 10, disposée en regard du second hublot et ayant un champ de visée suffisamment large pour couvrir la totalité d'un diamètre du gueulard au niveau de la surface des charges.

- une unité 12 de traitement électronique du signal vidéo délivré par la caméra. Cette unité de traitement a pour fonction principale de déterminer les coordonnées spatiales de la tache mobile 6 au cours du temps à partir des données définissant le plan de balayage 8, la position de la caméra et l'orientation de son axe de visée 11 par rapport à ce plan.

- des moyens de visualisation 13, par exemple une table traçante ou un tube cathodique, restituant à partir des coordonnées spatiales calculées dans l'unité de traitement 12, le profil réel de la surface des charges dans le plan de balayage 8.

Selon une variante de l'invention, on interpose entre la caméra 10 et l'unité de traitement 12, un organe de visualisation supplémentaire 14, tel qu'un écran de télévision, permettant de visualiser la projection du profil sur un plan perpendiculaire à l'axe 11 de la caméra.

Conformément à une variante avantageuse, l'unité de traitement 12 a pour fonction complémentaire de déterminer la répartition de l'épaisseur des couches et de la vitesse de descente des charges enfournées au gueulard. On rappelle à cet égard que deux opérations de balayage successives, l'une juste avant une phase d'enfournement de matière, l'autre immédiatement après, permettent, par comparaison, de déterminer la répartition de l'épaisseur de couche.

De même, la comparaison entre deux opérations de balayage effectuées entre deux phases d'enfournement successives dans un intervalle de temps connu permet de déterminer la répartition de la vitesse de descente des charges.

Bien entendu, par une commande appropriée de l'unité de traitement, la détermination de ces deux paramètres ne peut être que locale, par exemple en ne considérant qu'un point du profil dont la hauteur seule varie, les deux autres coordonnées ayant des valeurs fixées choisies à l'avance.

Les valeurs calculées de ces deux paramètres peuvent être avantageusement affichées sur les moyens de visualisation 13.

On va maintenant donner des indications relatives au plan de balayage 8 ainsi qu'au positionnement et à l'orientation du récepteur 10 par rapport à ce plan.

Le plan de balayage 8 peut être vertical ou oblique.

En règle générale, ce plan est vertical afin que la trace lumineuse 9 soit représentative du profil des charges tel qu'on l'entend habituellement, à savoir la ligne d'intersection de la surface des matières enfournées avec un plan de coupe parallèle à l'axe du gueulard.

Toutefois, on peut être amené à orienter obliquement ce plan, notamment pour pouvoir éclairer des zones cachées de la charge ou difficiles à atteindre autrement. Il existe également d'autres raisons à cela qui seront exposées par la suite.

Par ailleurs, l'intersection de ce plan 8, vertical ou oblique, avec la surface des charges 2, et qui définit comme on l'a vu la trace lumineuse 9, peut se faire selon un diamètre (c'est-à-dire passant par l'axe 15) ou selon n'importe quel autre corde du cercle déterminé par l'intersection de la surface 2 avec la paroi du gueulard.

Habituellement, il suffit de matérialiser la surface 2 par une trace 9 diamétrale. En effet, les systèmes actuels de chargement des matières au haut fourneau conduisent à une répartition sensiblement circulaire de celle-ci, de sorte que la connaissance du profil selon un diamètre (ou même un rayon) du gueulard est suffisante dans bien des cas.

Il demeure toutefois possible, conformément à une mise en oeuvre de l'invention de matérialiser la surface 2 par une pluralité de traces lumineuses 9 définissant une famille de cordes ayant un point courant le long de la circonférence du cercle précédemment défini et concourant en un point fixe à la verticale du miroir 5. En ce qui concerne la position du récepteur 10, une caractéristique importante de l'invention est que ce récepteur optique ne doit pas être placé dans le plan de balayage 8. Dans le cas contraire en effet, la quantité d'informations recueillie par le récepteur est substantiellement réduite, puisque la trace lumineuse 9 présente alors une image au mieux monodimensionnelle. Cette image est en effet reçue sous la forme d'un segment de droite dont la longueur apparente est d'autant plus raccourcie que la direction d'observation, c'est-à-dire l'axe de visée désigné en 11 sur la figure, s'éloigne de la verticale. Il devient alors fort complexe, au niveau du traitement du signal, de pouvoir reconstituer avec une précision acceptable le profil réel de la surface des charges. La condition restrictive qui vient d'être évoquée est la seule qui doit nécessairement être satisfaite pour la mise en oeuvre de l'invention.

Toutefois, pour une utilisation optimale de l'invention, on prêtera attention aux indications complémentaires suivantes.

Compte tenu de ce qui précède, on comprend sans difficulté que l'on ait intérêt pour la fidélité de l'image reçue, à placer le récepteur de manière que son axe optique 11 présente par rapport au plan de balayage 8 une orientation angulaire la plus proche possible de 90°.

On définit cette orientation angulaire relative par l'angle que fait le plan de balayage avec la projection de l'axe optique 11 sur un plan vertical passant par le récepteur 10 et mené perpendiculairement an plan de balayage 8. Cet angle est référencé α sur la figure.

Cependant, un autre paramètre doit être pris en considération : l'énergie lumineuse dissipée dans la direction d'observation.

On comprend en effet que, pour des raisons de sensibilité du récepteur, la visibilité de la trace lumineuse 9 dépend de ce paramètre. A cet égard, il est clair qu'il est avantageux de placer le récepteur 10 dans le plan de réflexion de la lumière, symétrique du plan de balayage 8 par rapport à la perpendiculaire à la région éclairée de la surface des charges.

Il apparaît donc avantageux d'opérer dans des conditions telles que la direction de réflexion de la lumière coïncide, ou du moins se rapproche, de la direction d'observation donnant une image fidèle de la trace lumineuse.

Or, en règle générale, une telle situation ne se présente pas, sauf en particulier dans le cas d'une mise en oeuvre de l'invention par un plan de balayage oblique. On voit donc apparaître ici un autre intérêt du plan oblique dont l'obliquité peut être aisément réglée de manière à placer l'axe de visée du récepteur dans le plan de réflexion de la lumière.

Ces cas particuliers mis à part, le choix de la position optimale du récepteur résulte donc d'un compromis entre la visibilité de la trace lumineuse 9 et la fidélité de son image reçue par le récepteur 10.

Ce choix est bien entendu laissé à l'homme de métier qui l'effectuera en fonction de ses propres souhaits ou nécessités.

A titre purement indicatif, une série d'essais effectués avec un plan de balayage vertical passant par l'axe 15 du gueulard (trace lumineuse 9 diamétrale), a montré que la position optimale du récepteur 10 correspondait à une orientation angulaire (α) de l'axe 11 de 45° environ.

Ces essais ont également montré que les angles α limites, quant à la fidélité d'une part et à la visibilité de l'image reçue d'autre part, étaient respectivement de 10 et 80° approximativement.

L'invention ne saurait se limiter à l'exemple décrit. En particulier, la présence d'un miroir tournant n'est pas nécessairement indispensable. Il peut être supprimé si le hublot correspondant est dimensionné suffisamment pour permettre la mise en place d'une source lumineuse mobile en rotation avec une amplitude assez grande pour couvrir la totalité d'un diamètre du gueulard au niveau de la surface des charges.

Par ailleurs, l'invention ne se limite pas à un plan de balayage axial, mais s'étend à d'autres plans dans la mesure où ils demeurent verticaux.

La source lumineuse peut être constituée par une simple lampe à incandescence ou, de préférence par un laser ou tout autre émetteur de lumière appropriée. On prendra soin toutefois, que l'intensité lumineuse du faisceau émis soit suffisante pour que, compte tenu de son affaiblissement au travers des poussières régnant au-dessus de la charge, le récepteur puisse être correctement sensibilisé.

A cet égard, le récepteur n'est pas limité à une caméra vidéo, mais peut être constitué par tout autre dispositif d'observation capable de contenir, dans son champ d'observation l'intégralité d'un diamètre du gueulard au niveau de la surface des charges.

Ainsi, on peut remplacer la caméra par un photodétecteur à cellules élémentaires multiples, tel qu'un réseau de photodiodes, ou de cellules à transfert de charges disponibles dans le commerce par exemple sous la dénomination "C.C.D".

REVENDICATIONS

1) Procédé de détermination en continu, par voie optique du profil de la surface des charges dans un haut fourneau, caractérisé en ce qu'il comprend les opérations suivantes :

- on balaye la surface des charges par un faisceau lumineux selon un plan vertical de manière à matérialiser, sous la forme d'une trace lumineuse, la coupe de la surface par ce plan de balayage,

- on observe ladite trace à partir d'une position déterminée située en dehors du plan de balayage,

- et, à partir des données définissant le plan de balayage, la position du lieu d'observation et la direction d'observation par rapport à ce plan, on détermine la position réelle des points constituant ladite trace lumineuse.

2) Procédé selon la revendication 1, caractérisé en ce que l'on observe la trace lumineuse dans une direction faisant, avec le plan de balayage, un angle compris entre 15 et 75° environ.

3) Procédé selon les revendications 1 et 2, caractérisé en ce que l'on observe la trace lumineuse à partir d'une position située dans un plan perpendiculaire au plan de balayage et passant par la région médiane de la trace lumineuse.

4) Dispositif pour la mise en oeuvre du procédé selon l'une quelconque des revendications précédentes, caractérisé en ce qu'il comprend un système d'éclairage de la surface des charges par un faisceau lumineux qui balaye, selon un plan vertical, ladite surface de manière à la matérialiser sous la forme d'une trace lumineuse, un système de réception comprenant un récepteur optique fixe observant ladite trace selon une direction faisant un angle non nul avec le plan de balayage et délivrant un signal représentatif de l'image reçue, une unité de traitement dudit signal permettant de déterminer les coordonnées spatiales des points constituant la trace lumineuse, et des moyens de visualisation restituant, à partir desdites coordonnées, le profil réel de la trace lumineuse dans le plan de balayage.

5) Dispositif selon la revendication 4, caractérisé en ce que le système d'éclairage comprend une source lumineuse fixe et un miroir tournant réfléchissant vers la surface des charges le faisceau lumineux reçu par la source.

6) Dispositif selon les revendications 4 et 5, caractérisé en ce que le système de réception comprend, en outre et en association avec le récepteur optique, un organe de visualisation intermédiaire permettant de restituer l'image de la trace lumineuse sur un plan perpendiculaire à l'axe du récepteur optique.

0014626

FIG. UNIQUE

0014626

Office européen
des brevets

**RAPPORT DE RECHERCHE EUROPEENNE**

Numéro de la demande

EP 80 40 0120

## DOCUMENTS CONSIDERES COMME PERTINENTS

| Catégorie | Citation du document avec indication, en cas de besoin, des parties pertinentes | Revendica-tion concernée |
|---|---|---|
| | BE - A - 682 292 (C.N.R.M.)<br>* Revendications 1-8; figures 1-3; page 2, alinéa 3; page 3, alinéa 2; page 5, alinéa 4 * | 1,2, 4-6 |
| | -- | |
| | LU - A - 48 988 (C.N.R.M.)<br>* Revendications 1,2 * | 1,2,4, 5 |
| | -- | |
| | LU - A - 48 960 (C.M.R.M.)<br>* Revendications * | 1,2,4 |
| | -- | |
| | FR - A - 1 571 455 (R.A. DUDRAGNE)<br>* Figures 1,2; résumé * | 1,2,4, 5,6 |
| | -- | |
| | FR - A - 2 139 682 (COMPAGNIE INDUSTRIELLE DES LASERS)<br>* Revendications 1-9; figures 1,2 * | 1,2,4, 5 |
| | -- | |
| | FR - A - 2 277 326 (C.R.M.)<br>* Revendications 1-22; figures 1-3; page 5; page 6, lignes 23-27 * | 1,2,4, 5 |
| | -- | |
| | BE - A - 852 372 (C.R.M.)<br>* Figure 1; revendications 1-10 | 1,2,4-6 |
| | -- | |
| P | BE - A - 872 578 (C.R.M.)<br>./. | 1,2, 4-6 |

**CLASSEMENT DE LA DEMANDE (Int. Cl. 3)**

C 21 B 7/24
G 01 B 11/24

**DOMAINES TECHNIQUES RECHERCHES (Int. Cl.)**

C 21 B 7/24
G 01 B 11/24
F 27 D 21/00

**CATEGORIE DES DOCUMENTS CITES**

X: particulièrement pertinent
A: arrière-plan technologique
O: divulgation non-écrite
P: document intercalaire
T: théorie ou principe a la base de l'invention
E: demande faisant interference
D: document cité dans la demande
L: document cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 12-05-1980 | ELSEN |

OEB Form 1503.1  06.78

**Office européen des brevets**

## RAPPORT DE RECHERCHE EUROPEENNE

| | DOCUMENTS CONSIDERES COMME PERTINENTS | | | CLASSEMENT DE LA DEMANDE (Int. Cl. 3) |
|---|---|---|---|---|
| Catégorie | Citation du document avec indication, en cas de besoin, des parties pertinentes | Revendication concernée | | |
| | * Revendications 1-20; figures 1-5 * | | | |
| | -- | | | |
| P | DE - A - 2 847 604 (NIPPON STEEL) <br> * Revendications 1-9; figures 1-3 * | 1,2, 4-6 | | |
| | ---- | | | |

DOMAINES TECHNIQUES RECHERCHES (Int. Cl. 3)

OEB Form 1503.2 06.78